# EUROPÄISCHE PATENTSCHRIFT

(11) **EP 3 467 317 B1**
(45) Veröffentlichungstag und Bekanntmachung des Hinweises auf die Patenterteilung: **04.11.2020**
(21) Anmeldenummer: 18192217.0
(22) Anmeldetag: 03.09.2018
(51) Int. Cl.: F04D 13/06, F04D 29/58, F04D 29/02

(54) **FLÜSSIGKEITSPUMPE**
FLUID PUMP
POMPE À LIQUIDE

(30) Priorität: 06.10.2017 DE 102017217788
(43) Veröffentlichungstag der Anmeldung: 10.04.2019
(73) Patentinhaber: Bühler Motor GmbH, 90459 Nürnberg (DE)
(72) Erfinder: BERNREUTHER, Georg, 90449 Nürnberg (DE)

(56) Entgegenhaltungen:
- EP-A1- 2 977 615
- DE-A1- 19 646 617
- DE-A1-102007 016 255
- DE-C1- 10 045 597

## Beschreibung

Die Erfindung betrifft eine Flüssigkeitspumpe nach Anspruch 1.

Im Folgenden werden insbesondere Flüssigkeitspumpen mit 3-phasigen Motoren im Leistungsbereich von ca. 30W bis 200W elektrischer Leistung betrachtet, ohne darauf beschränkt zu sein.

Gattungsgemäße Flüssigkeitspumpen, insbesondere Kfz-Wasserpumpen, werden häufig von einem elektronisch kommutierten Gleichstrommotor angetrieben, welcher mehrere Wärmeerzeugende Bauteile umfasst, zu denen vor allem ein bewickelter Stator und eine mit Leistungsbauteilen bestückte Leiterplatte gehört. Der Stator als auch die Leiterplatte sind in der Regel unmittelbar an einer Trennwand angeordnet, welche einen Trockenraum, in welchem die wärmeerzeugenden Bauteile angeordnet sind und einen Fördermedium durchströmten Nassraum voneinander abdichtet. Der Stator ist meist radial zu einer Drehachse eines Pumpenlaufrads und die Leiterplatte rechtwinklig zu deren Drehachse angeordnet. Das Pumpenlaufrad weist axial versetzt zu einem hydraulischen Teil einen magnetischen Teil auf, welcher dem bewickelten Stator radial gegenübersteht. Da die Anforderungen an die Leistungsdichte mit jeder Produktgeneration steigen, ist es notwendig die Wärme der Leistungsbauteile so gut wie möglich an die umgebenden Bauteile oder bevorzugt an das Fördermedium abzugeben. Letzteres eignet sich insbesondere aufgrund der erzwungenen Strömung für einen kontinuierlichen Abtransport der erzeugten Wärme. Im Kühlkreislauf einer Verbrennungsmaschine wird diese Wärme dann zusammen mit der Abwärme der Verbrennungsmaschine an einen Wasser-Luft Wärmetauscher abgegeben, welcher durch den Fahrtwind ebenfalls kontinuierlich Wärme an die Umgebung abgibt.

Die Wärmeübertragung von einem Bauteil auf ein anderes oder an ein Medium gelingt umso besser je größer die Oberflächen, insbesondere die Kontaktflächen zwischen den beteiligten Bereichen sind und je besser der Wärmeleitwert der verwendeten Materialien ist. Dennoch gelingt es vielfach nicht die erzeugte Wärme im ausreichenden Maße abzuleiten. Dies liegt auch daran, dass im magnetisch wirksamen Bereich des Nassraums nur eine geringe Fluidströmung aufgrund der engen Strömungswege möglich ist. Demgegenüber ist beispielsweise im Ansaugbereich ein hoher Volumenstrom gegeben. Es sind auch Flüssigkeitspumpen bekannt, bei denen ein aufwändiger Sekundärkreislauf eingerichtet ist, der einen Teil des Fördermediums umleitet und an den Wärmeerzeugern der Elektronik und/oder des Stators vorbeiführt. Hierdurch wird jedoch auch der hydraulische Wirkungsgrad beeinträchtigt. Ein weiterer Nachteil eines Sekundärkreislaufs wird durch mit dem Fördermedium mitgeführte Partikel und Schwebstoffe verursacht. Diese können den Sekundärkreislauf zusetzen und damit verstopfen.

Auch der Einsatz von hochwertigen Bauteilen oder der Einbau mehrerer parallel geschalteter Bauteile kann die Verlustleistung und damit die Wärmeentwicklung reduzieren. Ein anderer Weg wäre die Verwendung von temperaturfesteren Leiterplattenmaterialien, z. B. Keramikleiterplatten auf der Basis von Al₂O₃. Diesen Maßnahmen sind jedoch physikalische und vor allem auch wirtschaftliche Grenzen gesetzt.

Die DE 10 2007 016 255 A1 offenbart eine Flüssigkeitspumpe, mit einem um eine Achse drehbar in einem Fördermedium gelagerten Pumpenlaufrad und einer Leiterplatte, welche in einem gegenüber dem Fördermedium abgedichteten Trockenraum angeordnet ist, wobei Radialkräfte auf die Achse einerseits von einer Trennwand zwischen dem Trockenraum und dem Fördermedium andererseits von einem Pumpenkopf aufgenommen sind.

Die EP 2 977 615 A1 offenbart eine Flüssigkeitspumpe, mit einem um eine Achse drehbar in einem Fördermedium gelagerten Pumpenlaufrad und einer Leiterplatte, welche in einem gegenüber dem Fördermedium abgedichteten Trockenraum angeordnet ist, wobei Radialkräfte auf die Achse einerseits von einer Trennwand zwischen dem Trockenraum und dem Fördermedium andererseits von einem Pumpenkopf aufgenommen sind.

Aufgabe der Erfindung ist es daher bauliche Maßnahmen vorzusehen, die eine optimale Wärmeabfuhr von einer Leiterplatte und deren Leistungsbauelementen an das Fördermedium zu gewährleisten, ohne den hydraulischen Wirkungsgrad der Pumpe negativ zu beeinflussen. Ziel ist es die Übertemperatur auf der Leiterplatte gegenüber dem Fördermedium auf maximal 20K zu begrenzen.

Diese Aufgabe wird erfindungsgemäß durch die Merkmale des Anspruchs 1 gelöst. Da ein wesentlicher Teil der von elektronischen Bauteilen auf der Leiterplatte (4) erzeugten Wärme über einen Wärmeleitungspfad an das Kühlmedium abgegeben wird, welcher als Bestandteile die Achse (2) und eine Achsaufnahme (8, 9) aufweist, welche die Radialkräfte der Achse (2) von dieser auf die Trennwand bzw. den Pumpenkopf überträgt, ist eine besonders große nutzbare Oberfläche gegeben, über welche die Wärme an das Fördermedium abgegeben werden kann. Eine erste Achsaufnahme (8) liegt an einem axial zu einer Drehachse des Pumpenlaufrads (3) angeordneten Boden der Trennwand (6) an und eine zweite Achsaufnahme (9) ist in einem Ansaugkanal (10) des Pumpenkopfs (7) angeordnet und im Betrieb vom Fördermedium zumindest teilweise umströmt. Die Leiterplatte (4) weist eine Mehrzahl von Vias auf, welche eine wärmeleitende Verbindung von Leistungsbauteilen durch die Leiterplatte (4) zu deren gegenüberliegende Seite bildet und dort unmittelbar oder über ein Wärmeleitmedium mit der Wärmeleitplatte (11) in wärmeleitendem Kontakt stehen. Auch die Wärmeleitfähigkeit der Trennwand kann durch Modifikation des Kunststoffmaterials, aus welchem sie besteht optimiert werden. Hierzu werden dem Grundmaterial gut wärmeleitfähige Additiven zugesetzt. Eine sehr effektive Maßnahme, die Wärmeleitfähigkeit des Kühlpfads zu verbessern besteht darin, dass die Achse aus Aluminium, insbesondere einer Aluminiumlegierung besteht. Erfindungsgemäß besteht zumindest eine, vorzugsweise beide Achsaufnahmen (8, 9), aus einem Aluminiummaterial.

Weiterbildungen der Erfindung werden in den Unteransprüchen dargestellt.

Um die Wärmeleitfähigkeit der Achsaufnahme zur Wärmeleitung zu nutzen ist vorgesehen, dass die Achsaufnahme (8, 9) aus einem Aluminiummaterial besteht.

Vorzugsweise sind beide Achsaufnahmen (8, 9) aus einem besonders gut wärmeleitenden Aluminiummaterial hergestellt. Zu den geeignetsten Materialien, die nicht Teil der Erfindung sind, zählt auch Magnesium.

Im Folgenden werden mehrere Möglichkeiten genannt, wie die Wärme effizient von den Leistungsbauelementen auf die Wärmeleitplatte übertragbar ist. Diese Möglichkeiten können jeweils als einzige oder in Kombination mit einer oder mehreren der weiteren Möglichkeiten eingesetzt werden.

Eine weitere Möglichkeit besteht darin, dass die Leiterplatte (4) zumindest eine Ausnehmung aufweist, durch welche ein Leistungsbauelement hindurchtaucht und unmittelbar oder über ein Wärmeleitmedium mit der Wärmeleitplatte (11) in wärmeleitendem Kontakt steht.

Weiter ist es denkbar, dass zumindest eine Leiterbahn der Leiterplatte (4) unmittelbar oder über ein Wärmeleitmedium in wärmeleitendem Kontakt mit der Wärmeleitplatte (11) steht. Die Wärmeleitplatte (11) besteht vorzugsweise aus Aluminium oder einem Material mit vergleichbaren Eigenschaften.

Schließlich ist es auch möglich, dass die Wärmeleitplatte (11) zumindest eine elektrische Leiterbahn oder einen Leiterbahnbereich der Leiterplatte (4) bildet.

Einen guten Wärmeübergang von der Leiterplatte auf die Trennwand wird dadurch erreicht, dass eine Wärmeleitplatte (11) enganliegend zwischen der Leiterplatte (4) und der Trennwand (6) angeordnet und Bestandteil des Wärmeleitungspfads ist.

Dieser Wärmeübergang kann durch eine Vergrößerung der Oberfläche der Wärmeleitplatte und der Trennwand optimiert werden, hierzu wird die Wärmeleitplatte (11) mit ihre Oberfläche vergrößernde Geometrien ausgebildet, welche auf entsprechende Gegengeometrien der Trennwand (6) abgestimmt sind.

Es wird vorgeschlagen, dass die Geometrien aus umlaufenden vorspringenden Wandungen (12) bestehen.

Alternativ dazu können die Geometrien auch aus vorspringenden Zapfen (13) bestehen.

Prinzipiell sind alle die Oberfläche vergrößernden Geometrien geeignet, die eine Entformung aus einer Spritzgussform erlauben und die Designregeln für solche Formen erfüllen. Gleiches gilt für die Herstellung der Wärmeleitplatte.

Der Wärmeleitpfad lässt sich weiter verbessern, indem die erste Achsaufnahme eine eng an die Trennwand (6) anliegende großflächige Kontaktscheibe (14) und eine Aufnahmehülse (15) für die Achse (2) aufweist. Die Aufnahmehülse sollte möglichst großflächig sein und den vorhandenen Bauraum möglichst vollständig ausfüllen.

Auch die Oberfläche der ersten Achsaufnahme (8) sollte möglichst groß gewählt werden, hierzu wird ein an die Kontaktscheibe (14) anschließender Abstützkragen (16) vorgeschlagen, der sich radial an einem rohrförmigen Bereich (17) der Trennwand (6) abstützt.

Um möglichst viel Wärme transportieren zu können und um eine möglichst große Oberfläche zur Verbesserung des Wärmeübergangs zu gewinnen ist vorgesehen, dass der Durchmesser der Achse (2) mindestens 20% des Durchmessers der ersten Achsaufnahme (8) im Bereich der Kontaktscheibe (14) beträgt.

Im Fördermedium gibt die Achse über seine gesamte Länge Wärme an ihre Umgebung ab, dies kann dadurch optimiert werden, dass das Pumpenlaufrad (3) über hülsenförmige Gleitlager (18) auf der Achse (2) gelagert sind, welche einen Teil der von der Achse aufgenommenen Wärme an das Pumpenlaufrad (3) ableiten.

Damit diese Wärmeableitung möglichst groß ist wird vorgeschlagen, dass die Länge eines Gleitlagers (18) mindestens 10% der Länge der Achse (2) entspricht.

Da die Achse (2) über ihre Länge kontinuierlich Wärme abgibt sollte der Achsdurchmesser besonders in der Nähe der Wärmequelle besonders groß sein und kann dann in einem weiter entfernten Bereich kleiner gewählt werden, deshalb soll in Weiterbildung der Erfindung die Achse (2) zumindest zwei unterschiedlich große Durchmesserbereiche aufweisen, wobei der Achsabschnitt mit dem größeren Durchmesser in der ersten Achsaufnahme (8) aufgenommen ist. Aus wirtschaftlichen Gründen wird eine Achse mit einem einzigen Durchmesser jedoch in vielen Fällen bevorzugt.

Da im Ansaugkanal ein besonders hoher Durchsatz des Fördermediums vorliegt, kann hier die Wärme am effektivsten abtransportiert werden, deshalb ist es sehr wichtig möglichst viel von der Wärmeenergie, die in den Leistungsbauelementen der Leiterplatte entsteht bis zum Ansaugkanal zu leiten. Dies wird dadurch optimiert, dass die zweite Achsaufnahme (9) aus einem gut wärmeleitenden Material besteht und ein Zusatzgleitlager (31) und zumindest eine Speiche (23), vorzugsweise drei Speichen aufweist, welche einen einstückigen Körper bilden. Das Zusatzgleitlager (31) übernimmt die Wärme aus der Achse und leitet sie in die Speichen und auch direkt in das Fördermedium weiter.

Aus fertigungstechnischen und wirtschaftlichen Gründen wird der Pumpenkopf bevorzugt aus einem spritzgusstechnisch verarbeitbaren Kunststoffmaterial hergestellt. Um dennoch die genannten Vorteile abzubilden ist vorgesehen, dass die zweite Achsaufnahme (9) durch Urformen mit dem Pumpenkopf (7), insbesondere einem Ansaugkanal (10) des Pumpenkopfs (7) gefügt ist. Hierzu sollten die Wärmeausdehnungskoeffizienten möglichst nahe beieinander liegen. Dies ist bei der Paarung PPS und Aluminium der Fall.

Alternativ kann die zweite Achsaufnahme (9) mit dem Pumpenkopf (7), insbesondere einem Ansaugkanal (10) des Pumpenkopfs (7) durch Einpressen kraft- und/oder formschlüssig gefügt sein. Hierbei ist vorzugsweise ein Konus zwischen dem Pumpenkopf (7) und der Baugruppe aus Ansaugkanal (10) und zweiter Achsaufnahme (9) vorgesehen. Zusätzlich kann die Verbindung durch Verkleben, Verschweißen oder Verschrauben gesichert werden. Falls es die Dichtigkeitsanforderungen verlangen kann zusätzlich eine O-Ring-Dichtung zwischen den beiden Fügepartnern eingelegt werden. Alternativ kann auch ein Flüssigdichtstoff eingebracht werden.

Im optimalen Fall ist der Ansaugkanal (10) einstückiger Bestandteil der zweiten Achsaufnahme (9). Hierdurch vergrößert sich die Oberfläche der wärmeführenden Teile nochmals deutlich.

Der Ansaugkanal (10) ist in diesem Fall bevorzugt durch Urformen mit dem Pumpenkopf (7) gefügt, wobei der Pumpenkopf aus einem spritzgusstechnisch verarbeitbaren Kunststoffmaterial besteht.

Da Aluminium keine optimalen Abriebeigenschaften besitzt ist zweckmäßigerweise vorgesehen, dass die Achse zumindest im Lagerbereich mit einer abriebfesten Schicht, insbesondere einer Molybdän-, Chrom-Oxid, Aluminium-Oxid-, Nickel- oder einer Bronzeschicht versehen ist.

Alternativ dazu ist vorgesehen, dass zumindest ein Zusatzgleitlager (31), insbesondere ein Zylinderlager auf die Achse aufgepresst ist, wobei das Zusatzgleitlager (31) aus Kunststoff, Metall, aus einem graphithaltigen Material oder einem Keramikmaterial besteht. Um eine definierte Lage der Zusatzgleitlager (31) auf der Achse zu gewährleisten ist die Achse mit Absätzen (32) versehen.

Grundsätzlich ist es wichtig, dass das Verhältnis zwischen dem Durchmesser und der Länge der Achse (2) größer als 0,1, insbesondere größer als 0,15 und vorzugsweise größer als 0,2 ist. Je größer dieses Verhältnis desto größer ist der Wärmefluss und somit die erzielbare kühlende Wirkung.

Ausführungsbeispiele der Erfindung werden nachfolgend anhand der Zeichnung näher erläutert. Es zeigen:
Fig. 1 eine Schnittansicht durch eine erfindungsgemäße Flüssigkeitspumpe,
Fig. 2a eine Achse mit Beschichtungen,
Fig. 2b eine Achse mit Gleitlagern,
Fig. 3 eine erste Ausführungsform einer Achsaufnahme in einem Pumpenkopf,
Fig. 4 eine zweite Ausführungsform einer Achsaufnahme in einem Pumpenkopf,
Fig. 5 eine dritte Ausführungsform einer Achsaufnahme in einem Pumpenkopf,
Fig. 6 einen Pumpenkopf mit einem Ansaugkanal,
Fig. 7 eine Leiterplatte mit einer ersten Ausführungsform einer Wärmeleitplatte,
Fig. 8 eine Leiterplatte mit einer zweiten Ausführungsform einer Wärmeleitplatte,
Fig. 9 eine Leiterplatte mit einer dritten Ausführungsform einer Wärmeleitplatte und
Fig. 10 eine Leiterplatte mit einer vierten Ausführungsform einer Wärmeleitplatte.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

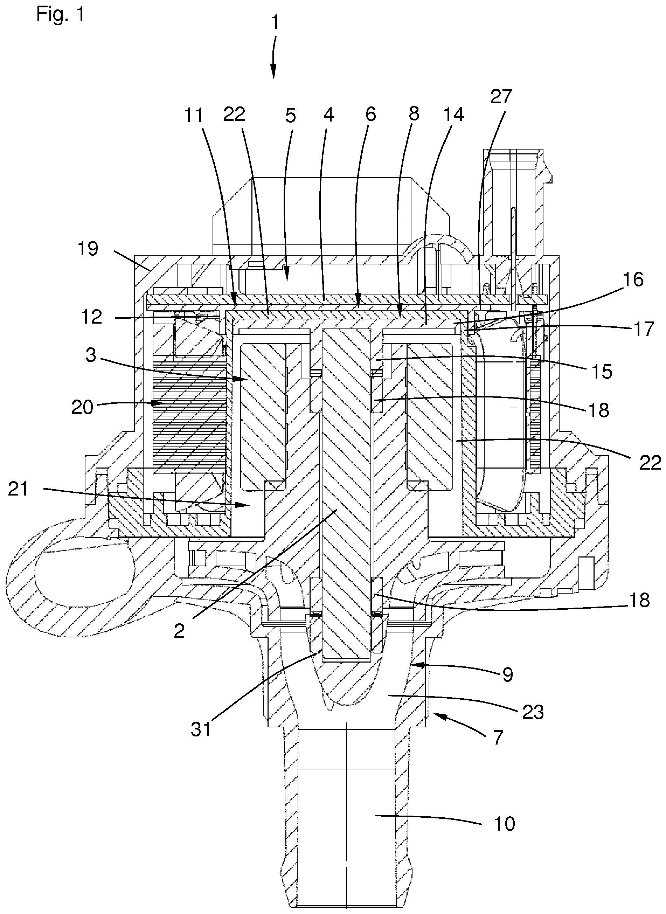

Fig. 1 zeigt eine Schnittansicht durch eine erfindungsgemäße Flüssigkeitspumpe 1, mit einem Motorgehäuse 19, einem Pumpenkopf 7, einer Trennwand 6 und einem Pumpenlaufrad 3. Das Motorgehäuse 19 und die Trennwand 6 bilden einen Trockenraum 5, in welchem eine Leiterplatte 4, ein bewickelter Stator 20 und eine Wärmeleitplatte 11 angeordnet sind. Die Trennwand 6 und der Pumpenkopf 7 begrenzen einen Nassraum 21, in welchem das Pumpenlaufrad 3, eine erste Achsaufnahme 8, eine zweite Achsaufnahme 9 und eine Achse 2 angeordnet sind. Das Pumpenlaufrad 3 ist über Gleitlager 18 auf der Achse 2 drehbar gelagert. Die Trennwand 6 besteht aus einem rohrförmigen Bereich 17 und einem scheibenförmigen Bereich 22. Die erste Achsaufnahme 8 weist eine Kontaktscheibe 14 auf, die sich von einer Aufnahmehülse 15 zur Aufnahme der Achse 2 radial bis zu dem rohrförmigen Bereich 17 der Trennwand 6 erstreckt. An die Kontaktscheibe 14 schließt ein Abstützkragen 16 an, der sich an den rohrförmigen Bereich 17 der Trennwand 6 anschmiegt und auf diese Weise die Kontaktfläche zwischen der ersten Achsaufnahme 8 und der Trennwand 6 vergrößert. Die Trennwand 6 ist hier aus einem Kunststoffmaterial durch ein Spritzgussverfahren hergestellt. Der scheibenförmige Bereich 22 der Trennwand 6 ist zur Verringerung des thermischen Widerstands sehr dünnwandig ausgebildet (z. B. 1mm) und erhält seine Stabilität durch eine Sandwichlage zwischen der Wärmeleitplatte 11 und der ersten Achsaufnahme 8. Eine solche Sandwichlage besteht zum Teil auch in radialer Richtung zwischen dem Abstützkragen 16 und einer vorspringenden Wandung 12 der Wärmeleitplatte 11. Die zweite Achsaufnahme 9 besteht aus einem gut wärmeleitenden Metallmaterial, während der Pumpenkopf 7 mit Ansaugkanal 10 aus einem spritzgusstechnisch verarbeitbaren Kunststoffmaterial besteht. Die zweite Achsaufnahme 9 ist über Speichen 23 mit dem Ansaugkanal 10 und damit mit dem Pumpenkopf 7 verbunden. Da der Ansaugkanal 10 im Betrieb vom Fördermedium durchströmt wird, kann die Wärme, die über die Achse 2 auf die zweite Achsaufnahme 9 und die Speichen 23 übertragen wird großflächig an das Fördermedium abgegeben werden. Im gezeigten Beispiel sind drei Speichen 23 vorgesehen (zwei sichtbar).

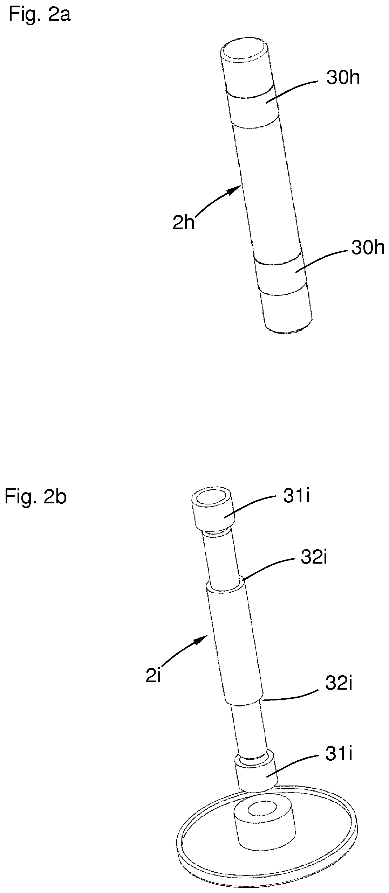

Fig. 2a zeigt eine Achse 2h, bestehend aus einem Aluminiummaterial. Zur Verbesserung der Verschleißeigenschaften ist die Achse 2 mit einer Beryllium-Schicht versehen.

Fig. 2b zeigt eine Achse 2i, bestehend aus einem Aluminiummaterial. Zur Verbesserung der Verschleißeigenschaften ist die Achse 2i mit Zusatzgleitlagern 31i versehen. Diese werden auf Absätzen 32i aufgepresst.

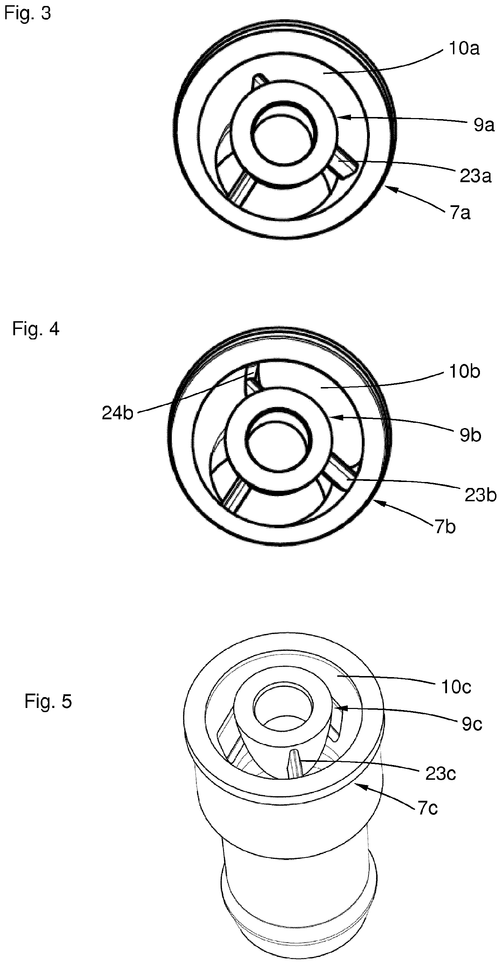

Fig. 3 zeigt eine erste Ausführungsform einer zweiten Achsaufnahme 9a in einem Pumpenkopf 7a. Hierbei ist die Achsaufnahme 9a in einen Ansaugkanal 10a und damit in den Pumpenkopf 7a durch Urformen gefügt (umspritzt).

Fig. 4 zeigt eine zweite Ausführungsform einer zweiten Achsaufnahme 9b in einem Pumpenkopf 7b. Hierbei ist die Achsaufnahme 9b durch Einpressen gefügt, wobei Speichen 23b sich in hierfür vorgesehene Nuten 24b eines Ansaugkanals 10b verkrallen. Da die zweite Achsaufnahme 9c im Betrieb stets vom Pumpenlaufrad 3 beaufschlagt wird, ist diese gegen unbeabsichtigte Demontage gesichert.

Fig. 5 zeigt eine dritte Ausführungsform einer zweiten Achsaufnahme 9c in einem Pumpenkopf 7c. Hierbei ist die zweite Achsaufnahme 9c einstückig mit einem Ansaugkanal 10c ausgeführt. Die Baueinheit aus Ansaugkanal 10c und der Achsaufnahme 9c ist durch Einpressen mit einem Pumpenkopf 7c gefügt. Da auch hierbei die zweite Achsaufnahme 9c im Betrieb stets vom Pumpenlaufrad 3 beaufschlagt wird, ist diese gegen unbeabsichtigte Demontage gesichert. Nicht erkennbar ist ein Konus zwischen dem Pumpenkopf und der zweiten Achsaufnahme 9c, wodurch die Haltekraft deutlich erhöht ist.

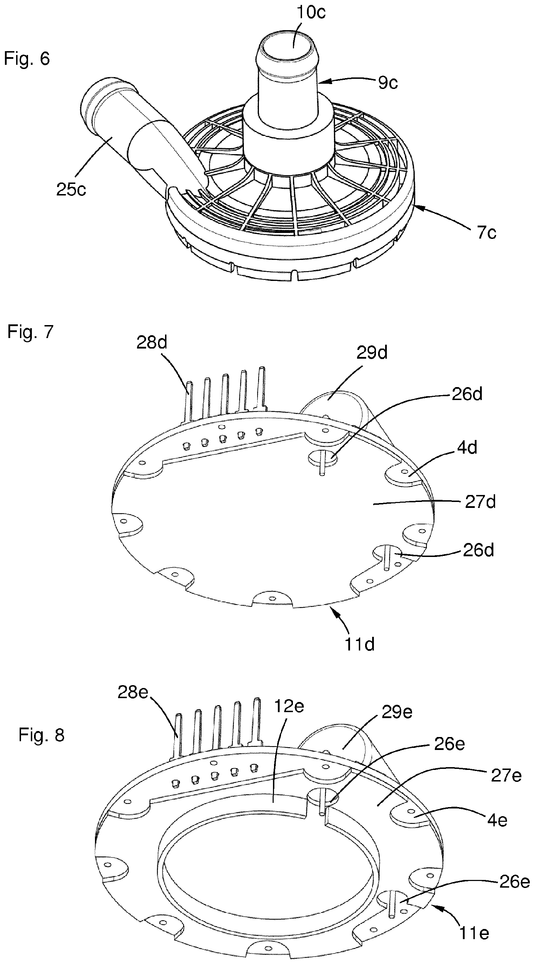

Fig. 6 zeigt den Pumpenkopf 7c mit dem Ansaugkanal 10c und der zweiten Achsaufnahme 9c. Weiter weist der Pumpenkopf 7c einen Ausgangskanal 25c auf.

Fig. 7 zeigt eine Leiterplatte 4d mit einer ersten Ausführungsform einer Wärmeleitplatte 11d. Diese ist als ebene Platte 27d ausgeführt und weist Ausnehmungen auf, welche als Leiterdurchführungen 26d dienen. Weiter sind Anschlusspins 28d und ein Kondensator 29d dargestellt.

Fig. 8 zeigt eine Leiterplatte 4e mit einer zweiten Ausführungsform einer Wärmeleitplatte 11e, welche eine vorspringende Wandung 12e aufweist, die an einer ebenen Platte 27e anschließen.

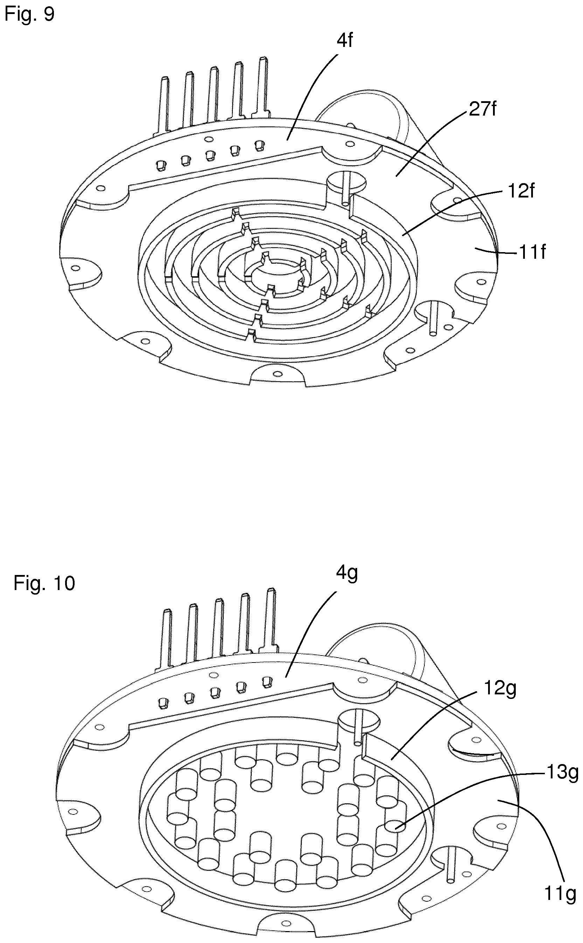

Fig. 9 zeigt eine Leiterplatte mit einer dritten Ausführungsform einer Wärmeleitplatte 11f, mit einer Mehrzahl von ineinander geschachtelten konzentrischen vorspringenden Wandungen 12f, welche von einer Leiterplatte 4f getragen wird. Durch die Vielzahl der Wandungen wird die Oberfläche vergrößert und damit die Fähigkeit Wärme zu übertragen verbessert.

Eine andere Möglichkeit die Oberfläche zu vergrößern zeigt Fig. 10. Die hier dargestellte vierte Ausführungsform einer Wärmeleitplatte 11g weist eine vorspringende Wandung 12g auf, welche einen Bereich mit einer Vielzahl an vorspringenden Zapfen 13g einschließt. Die Wärmeleitplatte 11g wird auch hier von einer Leiterplatte 4g getragen.

**Bezugszeichenliste**

| | | | |
|---|---|---|---|
| 1 | Flüssigkeitspumpe | 30 | Beschichtung |
| 2 | Achse | 31 | Zusatzgleitlager |
| 3 | Pumpenlaufrad | 32 | Absatz |
| 4 | Leiterplatte | | |
| 5 | Trockenraum | | |
| 6 | Trennwand | | |
| 7 | Pumpenkopf | | |
| 8 | erste Achsaufnahme | | |
| 9 | zweite Achsaufnahme | | |
| 10 | Ansaugkanal | | |
| 11 | Wärmeleitplatte | | |
| 12 | vorspringende Wandung | | |
| 13 | vorspringende Zapfen | | |
| 14 | Kontaktscheibe | | |
| 15 | Aufnahmehülse | | |
| 16 | Abstützkragen | | |
| 17 | rohrförmiger Bereich | | |
| 18 | Gleitlager | | |
| 19 | Motorgehäuse | | |
| 20 | Stator | | |
| 21 | Nassraum | | |
| 22 | scheibenförmiger Bereich | | |
| 23 | Speiche | | |
| 24 | Nut | | |
| 25 | Ausgangskanal | | |
| 26 | Leiterdurchführung | | |
| 27 | ebene Platte | | |
| 28 | Anschlusspin | | |
| 29 | Kondensator | | |

## Patentansprüche

1. Flüssigkeitspumpe (1), mit einem um eine Achse (2) drehbar in einem Fördermedium gelagerten Pumpenlaufrad (3) und einer Leiterplatte (4), welche in einem gegenüber dem Fördermedium abgedichteten Trockenraum (5) angeordnet ist, wobei Radialkräfte der Achse (2) einerseits von einer Trennwand (6) zwischen dem Trockenraum (5) und dem Fördermedium und andererseits von einem Pumpenkopf (7) aufgenommen sind, dass ein wesentlicher Teil der von elektronischen Bauteilen auf der Leiterplatte (4) erzeugten Wärme über einen Wärmeleitungspfad an das Kühlmedium abgegeben wird, welcher als Bestandteile die Achse (2) und eine Achsaufnahme (8, 9) aufweist, welche die Radialkräfte der Achse (2) von dieser auf die Trennwand (6) bzw. den Pumpenkopf (7) überträgt, wobei eine erste Achsaufnahme (8) an einem axial zu einer Drehachse des Pumpenlaufrads (3) angeordneten Boden der Trennwand (6) anliegt, dass eine zweite Achsaufnahme (9) in einem Ansaugkanal (10) des Pumpenkopfs (7) angeordnet ist und im Betrieb vom Fördermedium zumindest teilweise umströmt ist, dass eine Wärmeleitplatte (11) enganliegend zwischen der Leiterplatte (4) und der Trennwand (6) angeordnet ist und einen Bestandteil des Wärmeleitungspfads darstellt, dass das Material für die Trennwand (6) mit gut wärmeleitfähigen Additiven modifiziert ist, dass die Achse (2) aus Aluminium, insbesondere einer Aluminiumlegierung besteht und dass eine Achsaufnahme (8, 9), insbesondere beide Achsaufnahmen (8, 9) aus einem Aluminiummaterial bestehen.

2. Flüssigkeitspumpe nach Anspruch 1, **dadurch gekennzeichnet, dass** die Wärmeleitplatte (11) ihre Oberfläche vergrößernde Geometrien aufweist, welche auf entsprechende Gegengeometrien der Trennwand (6) abgestimmt sind.

3. Flüssigkeitspumpe nach Anspruch 2, **dadurch gekennzeichnet, dass** die Geometrien aus umlaufenden vorspringenden Wandungen (12) bestehen.

4. Flüssigkeitspumpe nach Anspruch 2, **dadurch gekennzeichnet, dass** die Geometrien aus vorspringenden Zapfen (13) bestehen.

5. Flüssigkeitspumpe nach einem der Ansprüche 1 bis 4, **dadurch gekennzeichnet, dass** die Leiterplatte (4) eine Mehrzahl von Vias aufweist, welche eine wärmeleitende Verbindung von Leistungsbauteilen durch die Leiterplatte (4) zu deren gegenüberliegende Seite bildet und dort unmittelbar oder über ein Wärmeleitmedium mit der Wärmeleitplatte (11) in wärmeleitendem Kontakt stehen.

6. Flüssigkeitspumpe nach einem der Ansprüche 1 bis 5, **dadurch gekennzeichnet, dass** die Leiterplatte (4) zumindest eine Ausnehmung aufweist durch welche ein Leistungsbauelement hindurchtaucht und unmittelbar oder über ein Wärmeleitmedium mit der Wärmeleitplatte (11) in wärmeleitendem Kontakt steht.

7. Flüssigkeitspumpe nach einem der Ansprüche 1 bis 6, **dadurch gekennzeichnet, dass** zumindest eine Leiterbahn der Leiterplatte (4) unmittelbar oder über ein Wärmeleitmedium in wärmeleitendem Kontakt mit der Wärmeleitplatte (11) steht.

8. Flüssigkeitspumpe nach einem der Ansprüche 1 bis 7, **dadurch gekennzeichnet, dass** die Wärmeleitplatte (11) zumindest eine elektrische Leiterbahn oder einen Leiterbahnbereich der Leiterplatte (4) bildet.

9. Flüssigkeitspumpe nach zumindest einem der vorangehenden Ansprüche, **dadurch gekennzeichnet, dass** die erste Achsaufnahme (8) eine eng an die Trennwand (6) anliegende großflächige Kontaktscheibe (14) und eine Aufnahmehülse (15) für die Achse (2) aufweist.

10. Flüssigkeitspumpe nach Anspruch 9, **dadurch gekennzeichnet, dass** die erste Achsaufnahme (8) einen an die Kontaktscheibe (14) anschließenden Abstützkragen (16) aufweist, der sich radial an einem rohrförmigen Bereich (17) der Trennwand (6) abstützt.

11. Flüssigkeitspumpe nach Anspruch 9 oder 10, **dadurch gekennzeichnet, dass** der Durchmesser der Achse (2) mindestens 20% des Durchmessers der ersten Achsaufnahme (8) im Bereich der Kontaktscheibe (14) beträgt.

12. Flüssigkeitspumpe nach zumindest einem der vorangehenden Ansprüche, **dadurch gekennzeichnet, dass** das Pumpenlaufrad (3) über hülsenförmige Gleitlager (18) auf der Achse (2) gelagert sind, welche einen Teil der von der Achse aufgenommenen Wärme an das Pumpenlaufrad (3) ableiten.

13. Flüssigkeitspumpe nach Anspruch 12, **dadurch gekennzeichnet, dass** die Länge eines Gleitlagers (18) mindestens 10% der Länge der Achse (2) entspricht.

14. Flüssigkeitspumpe nach zumindest einem der vorangehenden Ansprüche, **dadurch gekennzeichnet, dass** die Achse (2) zumindest zwei unterschiedlich große Durchmesserbereiche aufweist, wobei der Achsabschnitt mit dem größeren Durchmesser in der ersten Achsaufnahme (8) aufgenommen ist.

15. Flüssigkeitspumpe nach zumindest einem der vorangehenden Ansprüche, **dadurch gekennzeichnet, dass** die zweite Achsaufnahme (9) aus einem gut wärmeleitenden Material besteht und einem Zusatzgleitlager (31) und zumindest einer Speiche (23), vorzugsweise drei Speichen aufweist, welche einen einstückigen Körper bilden.

16. Flüssigkeitspumpe nach Anspruch 15, **dadurch gekennzeichnet, dass** die zweite Achsaufnahme (9) durch Urformen mit dem Pumpenkopf (7), insbesondere einem Ansaugkanal (10) des Pumpenkopfs (7) gefügt ist, wobei der Pumpenkopf (7) aus einem spritzgusstechnisch verarbeitbaren Kunststoffmaterial besteht.

17. Flüssigkeitspumpe nach Anspruch 15, **dadurch gekennzeichnet, dass** die zweite Achsaufnahme (9) mit dem Pumpenkopf (7), insbesondere einem Ansaugkanal (10) des Pumpenkopfs (7) durch Einpressen kraft- und/oder formschlüssig gefügt ist.

18. Flüssigkeitspumpe nach Anspruch 15 **dadurch gekennzeichnet, dass** der Ansaugkanal (10) einstückiger Bestandteil der zweiten Achsaufnahme (9) ist.

19. Flüssigkeitspumpe nach Anspruch 18, **dadurch gekennzeichnet, dass** der Ansaugkanal (10) durch Urformen mit dem Pumpenkopf (7) gefügt ist, wobei der Pumpenkopf (7) aus einem spritzgusstechnisch verarbeitbaren Kunststoffmaterial besteht.

20. Flüssigkeitspumpe nach Anspruch 1, **dadurch gekennzeichnet, dass** die Achse zumindest im Lagerbereich mit einer abriebfesten Schicht, insbesondere einer Molybdän-, Chrom-Oxid, Aluminium-Oxid-, Nickel- oder einer Bronzeschicht versehen ist.

21. Flüssigkeitspumpe nach Anspruch 1, **dadurch gekennzeichnet, dass** zumindest ein Gleitlager, insbesondere ein Zylinderlager auf die Achse aufgepresst ist, wobei das Gleitlager aus Kunststoff, Metall, aus einem graphithaltigen Material oder einem Keramikmaterial besteht.

22. Flüssigkeitspumpe nach zumindest einem der vorangehenden Ansprüchen, **dadurch gekennzeichnet, dass** das Verhältnis zwischen Durchmesser und Länge der Achse (2) größer als 0,1, insbesondere größer als 0,15 und vorzugsweise größer als 0,2 ist.

## Claims

1. A fluid pump (1), having a pump impeller (3), mounted in a pumped medium in a manner rotatable about an axle (2), and a printed circuit board (4) arranged in a dry space (5) sealed with respect to the pumped medium, wherein radial forces of the axle (2) are absorbed on the one hand by a dividing wall (6) between the dry space (5) and the pumped medium and on the other hand by a pump head (7), in that a substantial part of the warmth generated by electronic components on the printed circuit board (4) is given off to the cooling medium via a thermal conduction path which as component parts has the axle (2) and an axle receiver (8, 9) which transmits the radial forces of the axle (2) from the latter to the dividing wall (6) and the pump head (7) respectively, wherein a first axle receiver (8) contacts a bottom, arranged axially relative to a rotational axis of the pump impeller (3), of the dividing wall (6), in that a second axle receiver (9) is arranged in an intake channel (10) of the pump head (7) and in operation is at least partially flowed around by the pumped medium, in that a heat conducting plate (11) is arranged in a close-fitting manner between the printed circuit board (4) and the dividing wall (6) and constitutes a component part of the thermal conduction path, in that the material for the dividing wall (6) is modified by additives with good heat conductance, in that the axle (2) is composed of aluminium, in particular an aluminium alloy, and in that an axle receiver (8, 9), in particular both axle receivers (8, 9), is/are composed of an aluminium material.

2. A fluid pump according to claim 1, **characterised in that** the heat conducting plate (11) has geometries enlarging its surface, which are matched to corresponding counter geometries of the dividing wall (6).

3. A fluid pump according to claim 2, **characterised in that** the geometries are composed of encircling, projecting walls (12).

4. A fluid pump according to claim 2, **characterised in that** the geometries are composed of projecting pegs (13).

5. A fluid pump according to any one of claims 1 to 4, **characterised in that** the printed circuit board (4) has a plurality of vias which form a heat-conducting connection of power components through the printed circuit board (4) to the opposite side of the latter and are in heat-conducting contact there with the heat conducting plate (11) in a direct manner or via a heat conducting medium.

6. A fluid pump according to any one of claims 1 to 5, **characterised in that** the printed circuit board (4) has at least one opening through which a power component part extends and is in heat-conducting contact with the heat conducting plate (11) in a direct manner or via a heat conducting medium.

7. A fluid pump according to any one of claims 1 to 6, **characterised in that** at least one conductor track of the printed circuit board (4) is in heat-conducting contact with the heat conducting plate (11) in a direct manner or via a heat conducting medium.

8. A fluid pump according to any one of claims 1 to 7, **characterised in that** the heat conducting plate (11) forms at least one electrical conductor track or a conductor track region of the printed circuit board (4).

9. A fluid pump according to at least one of the preceding claims, **characterised in that** the first axle receiver (8) has a large-surface contact disc (14), contacting the dividing wall (6) in a close-fitting manner, and a receiving sleeve (15) for the axle (2).

10. A fluid pump according to claim 9, **characterised in that** the first axle receiver (8) has a support collar (16) adjoining the contact disc (14), which collar is radially supported on a tubular region (17) of the dividing wall (6).

11. A fluid pump according to claim 9 or 10, **characterised in that** the diameter of the axle (2) amounts to at least 20% of the diameter of the first axle receiver (8) in the region of the contact disc (14).

12. A fluid pump according to at least one of the preceding claims, **characterised in that** the pump impeller (3) is mounted on the axle (2) via sleeve-shaped plain bearings (18) which divert to the pump impeller (3) a part of the heat absorbed by the axle.

13. A fluid pump according to claim 12, **characterised in that** the length of a plain bearing (18) corresponds to at least 10% of the length of the axle (2).

14. A fluid pump according to at least one of the preceding claims, **characterised in that** the axle (2) has at least two diameter regions of differing size, wherein the axle portion with the larger diameter is received in the first axle receiver (8).

15. A fluid pump according to at least one of the preceding claims, **characterised in that** the second axle receiver (9) is composed of a material with good heat conduction and has an additional plain bearing (31) and at least one spoke (23), preferably three spokes, which form a one-piece body.

16. A fluid pump according to claim 15, **characterised in that** the second axle receiver (9) is joined to the pump head (7) in particular an intake channel (10) of the pump head (7), by primary shaping, wherein the pump head (7) is composed of a plastics material workable by injection moulding.

17. A fluid pump according to claim 15, **characterised in that** the second axle receiver (9) is joined in a force-locked and/or form-locked manner to the pump head (7), in particular an intake channel (10) of the pump head (7), by press fitting.

18. A fluid pump according to claim 15, **characterised in that** the intake channel (10) is an integral component part of the second axle receiver (9).

19. A fluid pump according to claim 18, **characterised in that** the intake channel (10) is joined to the pump head (7) by primary shaping, wherein the pump head (7) is composed of a plastics material workable by injection moulding.

20. A fluid pump according to claim 1, **characterised in that** at least in the bearing region, the axle is provided with an abrasion-resistant layer, in particular a layer of molybdenum, chromium oxide, aluminium oxide, nickel or bronze.

21. A fluid pump according to claim 1, **characterised in that** at least one plain bearing, in particular a journal bearing, is pressed onto the axle, wherein the plain bearing is composed of plastics material, metal, a graphite-containing material or a ceramic material.

22. A fluid pump according to at least one of the preceding claims, **characterised in that** the relationship between diameter and length of the axle (2) is greater than 0.1, in particular greater than 0.15 and preferably greater than 0.2.

## Revendications

1. Pompe à liquide (1), avec une roue à aubes de pompe (3), montée dans un milieu à refouler de manière à pouvoir tourner autour d'un axe (2), et une carte de circuits imprimés (4), laquelle est disposée dans un espace sec (5) étanchéifié par rapport au milieu à refouler, dans laquelle des forces radiales de l'axe (2) sont réceptionnées d'une part par une cloison (6) entre l'espace sec (5) et le milieu à refouler et d'autre part par une tête de pompe (7), qu'une partie importante de la chaleur produite par des composants électroniques sur la carte de circuits imprimés (4) est délivrée sur le réfrigérant par l'intermédiaire d'un chemin de conduction thermique, lequel présente comme éléments constitutifs l'axe (2) et un logement d'axe (8, 9), lequel transmet les forces radiales de l'axe (2) de celui-ci sur la cloison (6) ou la tête de pompe (7), dans laquelle un premier logement d'axe (8) s'applique contre un fond de la cloison (6) disposé axialement par rapport à un axe de rotation de la roue à aubes de pompe (3), qu'un deuxième logement d'axe (9) est disposé dans un canal d'aspiration (10) de la tête de pompe (7) et, lors du fonctionnement, est entouré au moins en partie par un écoulement de milieu à refouler, qu'une plaque thermoconductrice (11) est disposée de manière à se situer étroitement entre la carte de circuits imprimés (4) et la cloison (6) et représente un élément constitutif du chemin de conduction thermique, que le matériau pour la cloison (6) est modifié avec des additifs ayant une conductibilité thermique satisfaisante, que l'axe (2) est constitué d'aluminium, en particulier d'un alliage d'aluminium et qu'un logement d'axe (8, 9), en particulier les deux logements d'axe (8, 9) sont constitués d'un matériau d'aluminium.

2. Pompe à liquide selon la revendication 1, **caractérisée en ce que** la plaque thermoconductrice (11) présente des géométries augmentant sa surface, lesquelles sont adaptées aux géométries complémentaires correspondantes de la cloison (6).

3. Pompe à liquide selon la revendication 2,
**caractérisée en ce que** les géométries sont constituées de parois (12) en saillie périphériques.

4. Pompe à liquide selon la revendication 2, **caractérisée en ce que** les géométries sont constituées de tourillons (13) en saillie.

5. Pompe à liquide selon l'une quelconque des revendications 1 à 4, **caractérisée en ce que** la carte de circuits imprimés (4) présente une pluralité de trous d'interconnexion, laquelle forme une liaison thermo-conductrice de composants de puissance à travers la carte de circuits imprimés (4) par rapport à la face opposée de celle-ci, et, à cet endroit, sont en contact thermo-conducteur avec la plaque thermo-conductrice (11) de manière directe ou par l'intermédiaire d'un milieu thermo-conducteur.

6. Pompe à liquide selon l'une quelconque des revendications 1 à 5, **caractérisée en ce que** la carte de circuits imprimés (4) présente au moins un évidement à travers lequel s'enfonce un composant de puissance et est en contact thermo-conducteur avec la plaque thermo-conductrice (11) de manière directe ou par l'intermédiaire d'un milieu thermo-conducteur.

7. Pompe à liquide selon l'une quelconque des revendications 1 à 6, **caractérisée en ce qu'**au moins un tracé conducteur de la carte de circuits imprimés (4) est en contact thermo-conducteur avec la plaque thermo-conductrice (11) de manière directe ou par l'intermédiaire d'un milieu thermo-conducteur.

8. Pompe à liquide selon l'une quelconque des revendications 1 à 7, **caractérisée en ce que** la plaque thermo-conductrice (11) forme au moins un tracé conducteur électrique ou une zone de tracé conducteur de la carte de circuits imprimés (4).

9. Pompe à liquide selon au moins l'une des revendications précédentes, **caractérisée en ce que** le premier logement d'axe (8) présente un disque de contact (14) de grande surface s'appliquant étroitement contre la cloison (6) et un manchon de logement (15) pour l'axe (2).

10. Pompe à liquide selon la revendication 9, **caractérisée en ce que** le premier logement d'axe (8) présente une collerette d'appui (16), adjacente au disque de contact (14), qui s'appuie radialement contre une zone (17) tubulaire de la cloison (6).

11. Pompe à liquide selon la revendication 9 ou 10, **caractérisée en ce que** le diamètre de l'axe (2) atteint au moins 20 % du diamètre du premier logement d'axe (8) dans la zone du disque de contact (14).

12. Pompe à liquide selon au moins l'une des revendications précédentes, **caractérisée en ce que** la roue à aubes de pompe (3) sont montées sur l'axe (2) par l'intermédiaire de paliers lisses (18) en forme de manchons, lesquels dévient une partie de la chaleur absorbée par l'axe sur la roue à aubes de pompe (3).

13. Pompe à liquide selon la revendication 12, **caractérisée en ce que** la longueur d'un palier lisse (18) correspond à au moins 10 % de la longueur de l'axe (2).

14. Pompe à liquide selon au moins l'une des revendications précédentes, **caractérisée en ce que** l'axe (2) présente au moins deux plages de diamètres de dimension différente, dans laquelle la section d'axe avec le plus grand diamètre est logée dans le premier logement d'axe (8).

15. Pompe à liquide selon au moins l'une des revendications précédentes, **caractérisée en ce que** le deuxième logement d'axe (9) est constitué d'un matériau bien thermo-conducteur et d'un palier lisse supplémentaire (31) et d'au moins un rayon (23), de préférence trois rayons, lesquels forment un corps d'une seule pièce.

16. Pompe à liquide selon la revendication 15, **caractérisée en ce que** le deuxième logement d'axe (9) est assemblé par formage primaire avec la tête de pompe (7), en particulier un canal d'aspiration (10) de la tête de pompe (7), dans laquelle la tête de pompe (7) est constituée d'une matière plastique pouvant être transformée par technique de moulage par injection.

17. Pompe à liquide selon la revendication 15, **caractérisée en ce que** le deuxième logement d'axe (9) est assemblé à force et/ou par coopération de formes par insertion à force avec la tête de pompe (7), en particulier un canal d'aspiration (10) de la tête de pompe (7).

18. Pompe à liquide selon la revendication 15, **caractérisée en ce que** le canal d'aspiration (10) fait partie d'une seule pièce du deuxième logement d'axe (9).

19. Pompe à liquide selon la revendication 18, **caractérisée en ce que** le canal d'aspiration (10) est assemblé par formage primaire avec la tête de pompe (7), dans laquelle la tête de pompe (7) est constituée d'une matière plastique pouvant être transformée par technique de moulage par injection.

20. Pompe à liquide selon la revendication 1, **caractérisée en ce que** l'axe est pourvu au moins dans la zone de palier d'une couche résistante à l'abrasion, en particulier d'une couche de molybdène, d'oxyde de chrome, d'oxyde d'aluminium, de nickel ou bronze.

21. Pompe à liquide selon la revendication 1, **caractérisée en ce qu'**au moins un palier lisse, en particulier un palier cylindrique, est pressé sur l'axe, dans laquelle le palier lisse est constitué de matière plastique, de métal, d'un matériau contenant du graphite ou d'un matériau céramique.

22. Pompe à liquide selon au moins l'une des revendications précédentes, **caractérisée en ce que** le rapport entre le diamètre et la longueur de l'axe (2) est supérieur à 0,1, en particulier supérieur à 0,15 et de préférence supérieur à 0,2.
